# EUROPÄISCHE PATENTSCHRIFT

(11) **EP 4 133 923 B1**
(45) Veröffentlichungstag und Bekanntmachung des Hinweises auf die Patenterteilung: **16.10.2024**
(21) Anmeldenummer: 22168313.9
(22) Anmeldetag: 14.04.2022
(51) Int. Cl.: A01B 63/111, A01B 63/00, A01B 79/00

(54) **VERFAHREN ZUR VORAB-OPTIMIERUNG LANDWIRTSCHAFTLICHER ARBEITSVORGÄNGE FÜR LANDWIRTSCHAFTLICHE GESPANNE**
METHOD FOR PRE-OPTIMIZING AGRICULTURAL WORKING OPERATIONS FOR AGRICULTURAL VEHICLE COMBINATIONS
PROCÉDÉ D'OPTIMISATION PRÉALABLE DES PROCESSUS AGRICOLES POUR ATTELAGES AGRICOLES

(30) Priorität: 10.08.2021 DE 102021120762
(43) Veröffentlichungstag der Anmeldung: 15.02.2023
(73) Patentinhaber: CLAAS Tractor SAS, 78141 Vélizy-Villacoublay Cedex (FR)
(72) Erfinder: Birkmann, Christian, 33775 Versmold (DE); Wieckhorst, Jan Carsten, 29525 Uelzen Orsteil Hanstedt 2 (DE); Pieper, Jona, 59394 Nordkirchen (DE); Schaub, Christian, 33098 Paderborn (DE); Ehlert, Christian, 33719 Bielefeld (DE); Meyer, Lennart, 52072 Aachen (DE)
(74) Vertreter: CLAAS Gruppe

(56) Entgegenhaltungen:
- DE-A1- 102014 106 775
- DE-A1- 102018 123 480
- DE-A1- 102019 122 114
- US-A1- 2016 071 223
- US-A1- 2018 120 133

## Beschreibung

Die vorliegende Erfindung betrifft ein Verfahren zur Vorab-Optimierung landwirtschaftlicher Arbeitsvorgänge für landwirtschaftliche Gespanne gemäß dem Oberbegriff von Anspruch 1 sowie eine Optimierungs-Steueranordnung gemäß Anspruch 13.

Landwirtschaftliche Arbeitsmaschinen wie Mähdrescher, Feldhäcksler und Traktoren, können mit diversen Anbaugeräten kombiniert werden. Diese Anbaugeräte werden über eine Geräteschnittstelle an die landwirtschaftliche Arbeitsmaschine angebaut. Vorliegend stehen landwirtschaftliche Gespanne mit einer landwirtschaftlichen Arbeitsmaschine und einem landwirtschaftlichen Anbaugerät im Vordergrund, wobei das landwirtschaftliche Anbaugerät insbesondere ein eigenes Fahrzeug sein kann. Dieses wird vorzugsweise von der landwirtschaftlichen Arbeitsmaschine gezogen.

Derartige Anbaugeräte dienen allgemein der Durchführung einer landwirtschaftlichen Arbeitsaufgabe. Im Vordergrund stehen hier Feldbearbeitungen. Bei diesen Feldbearbeitungen kann es sich beispielsweise um Aussaat- oder Düngevorgänge handeln, um das Auftragen von Pflanzenschutzmittel, Bodenbearbeitungen wie das Pflügen oder Erntevorgänge wie das Mähen. Diesen Feldbearbeitungen ist gemeinsam, dass die Anbaugeräte dabei zumeist auf eine spezifische Arbeitshöhe eingestellt werden. Die Arbeitshöhe kann, beispielsweise beim Pflügen, auch einen negativen Wert annehmen und somit eine Arbeitstiefe sein. Der Erfolg und zum Teil der Energieverbrauch der Feldbearbeitung hängen dabei oft maßgeblich von der Arbeitshöhe ab. Gleichzeitig hängt diese jedoch von diversen Maschinenparametern des Anbaugeräts und der landwirtschaftlichen Arbeitsmaschine ab.

Es ist grundsätzlich schwer, Einstellungen für eine kraftstoff-, performance-, kosten- oder arbeitsqualitätsoptimale Einstellung der landwirtschaftlichen Arbeitsmaschine zu finden. Diese hängen von Eigenschaften der jeweiligen landwirtschaftlichen Arbeitsmaschine und dem jeweiligen landwirtschaftlichen Anbaugerät, aber auch von Eigenschaften des Feldes und dem Gesamtkontext eines landwirtschaftlichen Betriebes ab.

Eine kostenoptimierte Einstellung des landwirtschaftlichen Gespanns beispielsweise lässt sich alleine vor Ort während eines Arbeitsvorgangs nicht durchführen, wenn die für den Betrieb geltenden Kostenfaktoren wie Arbeitskosten, Maschinenkosten, Kraftstoffkosten und dergleichen nicht bekannt sind.

Es ist beispielsweise aus DE 10 2017 116 593 A1 und DE 10 2018 111 076 A1 bekannt, den Benutzer bei der Einstellung von Maschinenparametern des landwirtschaftlichen Gespanns zu unterstützen. Auch Systeme zur Vorababschätzung von optimierten Einstellungen sind bekannt. Weiterhin ist aus der US2018/120133A1 ein System zur optimierten Einstellung von Maschinenparametern bekannt.

Grundsätzlich können gespannferne Optimierungsdaten wie Kosten von Maschinen, Personal, Rohstoffen etc., Bodenarten, Fruchtfolgen eines Feldes, allgemeine Planungen usw. berücksichtigt werden, um einen Optimierungsdatensatz zu ermitteln, der von dem landwirtschaftlichen Gespann zur Einstellung von Maschinenparametern genutzt werden kann.

Es ist eine Herausforderung, optimierte Einstellungen für Maschinenparameter zu ermitteln. Die Arbeitshöhe ist dabei ein besonders relevanter Maschinenparameter, dessen Ermittlung und Einstellung komplex und somit bezüglich der notwendigen Hard- und Software kostenintensiv ist.

Der Erfindung liegt das Problem zugrunde, die bekannten Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass ein Sensor genutzt werden kann, um eine absolute Arbeitshöhe mehrerer unterschiedlicher Anbaugeräte zu ermitteln und dass ein Optimierungsdatensatz so ermittelt werden kann, dass Optimierungsziele, gespannferne Optimierungsdaten und Optimierungsdaten des Gespanns zusammengefügt werden, um beispielsweise auf Basis von Benutzervorgaben, Messwerten oder dergleichen eine optimierte Arbeitshöhe vorzuschlagen oder auf Basis einer eingestellten Arbeitshöhe andere Maschinenparameter hinsichtlich der Optimierungsziele zu optimieren.

Durch die Wiederverwendung des Sensors wird eine kostengünstige Ermittlung der absoluten Arbeitshöhe ermöglicht. Indem dieser wichtige Maschinenparameter mit weiteren Optimierungsdaten in Verbindung gebracht wird, lässt sich insgesamt eine bessere Optimierung des Arbeitsvorgangs erreichen. Besonders interessant ist dabei die Möglichkeit, die Arbeitshöhe für unterschiedliche Anbaugeräte zu optimieren.

Im Einzelnen wird vorgeschlagen, dass die Sensoranordnung eingerichtet ist, die absolute Arbeitshöhe mehrerer unterschiedlicher Anbaugeräte mittels desselben Sensors zu ermitteln und dass der Optimierungsdatensatz einen Vorschlag für eine hinsichtlich der Optimierungsziele optimierte Arbeitshöhe des Anbaugerätes und/oder Vorschläge für von einer eingestellten Arbeitshöhe abhängige, hinsichtlich der Optimierungsziele optimierte Einstellungen anderer Maschinenparameter des landwirtschaftlichen Gespanns aufweist.

Bei einer bevorzugten Ausgestaltung gemäß Anspruch 2 ist der Sensor reversibel an den Anbaugeräten montierbar und wird zur Ermittlung der Arbeitshöhe mehrerer Anbaugeräte genutzt. Eine derart modulare Sensorik ermöglicht eine kostengünstige Messung der Arbeitshöhe unterschiedlicher Anbaugeräte. Ist dabei die Sensorhalterung getrennt vom Sensor an dem Anbaugerät montierbar und vorzugsweise so ausgestaltet, dass sie an dem Anbaugerät verbleibt, ist die Montage des Sensors außerdem schnell und einfach durchgeführt. Es wird somit möglich, mit nur einem oder wenigen Sensoren Arbeitshöhen vieler landwirtschaftlicher Anbaugeräte zu messen. Somit kann auf kostengünstige Art und Weise eine verbesserte Optimierung der Feldbearbeitung erfolgen.

Der Sensor kann als Abstandssensor ausgestaltet sein. Anspruch 3 gibt bevorzugte Typen von Abstandssensoren an. Diese haben sich im landwirtschaftlichen Bereich besonders bewährt. Insbesondere bieten sie einen guten Ausgleich zwischen Robustheit und Kosten.

Gemäß Anspruch 4 kann der Optimierungsdatensatz Kennfelder aufweisen, die die Abhängigkeiten der Einstellungen von Maschinenparametern des landwirtschaftlichen Gespanns von anderen Maschinenparametern des landwirtschaftlichen Gespanns und/oder Messdaten abbilden. Derartige Kennfelder weisen den Vorteil auf, dass sie für einen konkreten Arbeitspunkt oder Arbeitsbereich optimiert sind und in diesem Arbeitsbereich Änderungen von Maschinenparametern mit wenig Rechenleistung abbildbar sind. So können Änderungen von Maschinenparametern als Bewegungen auf den Kennfeldern verstanden werden, die zumeist keine Änderung der Kennfelder selbst erzwingen. Erst wenn sich grundlegende Annahmen oder größere Änderungen ergeben, werden die Kennfelder hier und vorzugsweise angepasst, um darauf zu reagieren. Solange sich die Kennfelder selbst nicht ändern, kann daher von einer Steuerung gesprochen werden, die Änderung der Kennfelder entspricht einer Art Regelung.

Der Optimierungsdatensatz kann gemäß Anspruch 5 montagepositionsabhängig sein. Dies trägt dem Umstand Rechnung, dass nicht jede beliebige Arbeitshöhe eines Anbaugerätes immer austauschbar verwendbar ist. Je nach Montageposition muss die Arbeitshöhe anders berücksichtigt werden. Auch die Montageposition selbst kann, wie noch erläutert wird, Gegenstand der Optimierung sein.

Anspruch 6 gibt bevorzugt von der eingestellten Arbeitshöhe abhängige Einstellungen an, die aus dem Optimierungsdatensatz ermittelt werden können.

Neben der konkreten Gespannoptimierung besteht auch die Möglichkeit, die Auswahl der landwirtschaftlichen Arbeitsmaschine und/oder des landwirtschaftlichen Anbaugerätes oder vordefinierter Gespanne und/oder Konfigurationen der Sensoranordnung zu optimieren. So können beispielsweise unterschiedliche Anbaugeräte auf verschiedene Arbeitsvorgänge verteilt werden, die vorhandenen Sensoren können zur Maximierung ihres Nutzens ebenfalls verteilt werden und dabei können insgesamt die Möglichkeiten der Optimierungsdatensätze für die Gespanne berücksichtigt werden. Gleichzeitig können die gemachten Vorschläge auch in den Optimierungsdatensätzen berücksichtigt werden. Diese Ausgestaltungen sind Gegenstand von Anspruch 7.

Es gibt zumeist mehrere konkurrierende Optimierungsziele. Gemäß Anspruch 8 kann es für diese Optimierungsziele Gewichtungen geben, die bereits in der Optimierungsroutine zur Optimierung des Optimierungsdatensatzes berücksichtigt werden. Dabei ist auch möglich, die Gewichtungen zumindest einiger Zielvorgaben während der Durchführung des Arbeitsvorganges zu ändern. Beispielsweise kann eine Veränderung der Wetterlage dazu führen, dass Geschwindigkeit gegenüber Kosten priorisiert wird. Diese Änderung kann spontan auf dem Feld notwendig werden.

Anspruch 9 betrifft die Ermittlung einer optimierten Arbeitshöhe während des Arbeitsvorgangs basierend auf neuen oder veränderten Gewichtungen der Zielvorgaben. Dadurch kann die Arbeitshöhe als besonders relevanter Maschinenparameter dynamisch optimiert werden.

Anspruch 10 betrifft die Möglichkeit, auch Vorschläge für Voreinstellungen der landwirtschaftlichen Arbeitsmaschine und/oder des landwirtschaftlichen Anbaugerätes zu ermitteln und in dem Optimierungsdatensatz zu berücksichtigen. Bei diesen Voreinstellungen handelt es sich um Einstellungen, die während des Arbeitsvorgangs nicht ohne weiteres verändert werden können. Beispiele sind eine Achsballastierung oder ein Reifendruck.

Weitere gespannferne Optimierungsdaten sind Gegenstand von Anspruch 11. Diese ermöglichen eine gute Berücksichtigung von Einflussfaktoren im Optimierungsdatensatz, die auf dem Feld nicht mehr ohne Weiteres ermittelbar oder berücksichtigbar sind oder die allgemein nicht direkt das Gespann betreffen wie beispielsweise das Wetter.

Bei einer besonders bevorzugten Ausgestaltung gemäß Anspruch 12 ist vorgesehen, dass Messdaten des Sensors vergangener Arbeitsvorgänge in der Optimierungsroutine berücksichtigt werden. Beispielsweise die Arbeitstiefe eines Pfluges gibt diverse relevante Informationen über den Zustand des Feldes an. Somit realisiert sich ein weiterer Vorteil der Sensoranordnung und insbesondere der modularen Sensorik.

Nach einer weiteren Lehre gemäß Anspruch 13, der eigenständige Bedeutung zukommt, wird eine Optimierungs-Steueranordnung eingerichtet zur Verwendung in dem vorschlagsgemäßen Verfahren beansprucht.

Auf alle Ausführungen zu dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt
- Fig. 1: eine landwirtschaftliche Flotte mit Sensoranordnung während der Durchführung des vorschlagsgemäßen Verfahrens und
- Fig. 2: in a) bis d) unterschiedliche Anbaugeräte, mit denen das vorschlagsgemäße Verfahren durchgeführt werden kann.

Die vorschlagsgemäße Lösung lässt sich auf einen weiten Bereich landwirtschaftlicher Arbeitsmaschinen 1, insbesondere selbstfahrender landwirtschaftlicher Arbeitsmaschinen 1, anwenden. Dazu gehören Zugmaschinen, insbesondere Traktoren, und Erntemaschinen, insbesondere Mähdrescher, Feldhäcksler o.dgl.

Bei dem dargestellten und insoweit bevorzugten Ausführungsbeispiel handelt es sich bei der landwirtschaftlichen Arbeitsmaschine 1 um einen Traktor. Die Arbeitsmaschine 1 lässt sich über mindestens eine Geräteschnittstelle 2 mit mindestens einem Anbaugerät 3 bestücken. Bei der Geräteschnittstelle 2 handelt es sich hier ganz allgemein um eine mechanische Kupplung zwischen der Arbeitsmaschine 1 und dem Anbaugerät 3. Bei dem dargestellten und insoweit bevorzugten Ausführungsbeispiel ist die Geräteschnittstelle 2 als Dreipunkt-Kraftheber ausgestaltet, der für die Kopplung mit dem Anbaugerät 3 zwei Unterlenker und einen Oberlenker aufweist. Die Geräteschnittstelle 2 kann als Front- oder Heckkraftheber ausgestaltet sein. Grundsätzlich kann es sich bei der Geräteschnittstelle 2 aber auch um ein Zugpendel handeln. Andere Varianten für die Geräteschnittstelle 2 sind Systeme mit einfacher Zugzapfenkupplung, mit Hitch Haken, mit Kugelkopfkupplung oder dergleichen.

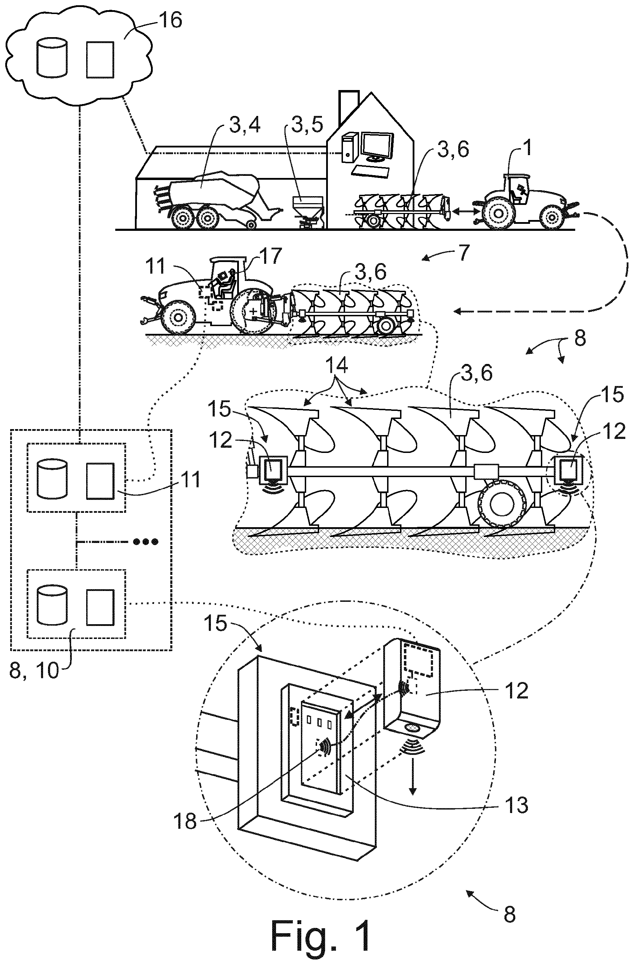

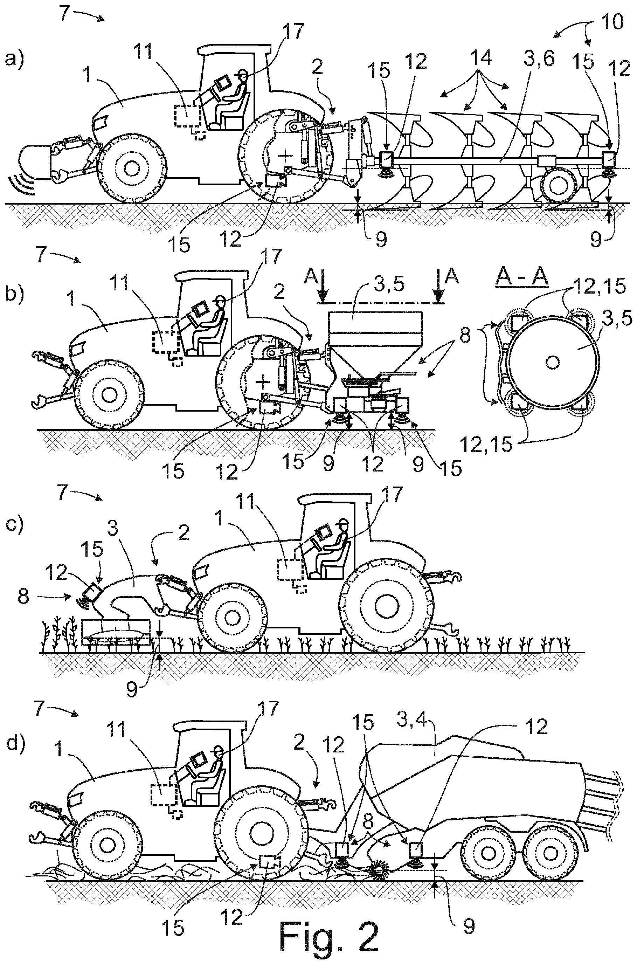

Fig. 1 zeigt mehrere landwirtschaftliche Anbaugeräte 3, die in dem vorschlagsgemäßen Verfahren verwendbar sind, konkret eine Ballenpresse 4, ein Kunstdüngerstreuer 5 und einen Pflug 6. In Fig. 2 sind diese in Aktion dargestellt.

Das in den Figuren dargestellte und insoweit bevorzugte Ausführungsbeispiel betrifft ein Verfahren zur Vorab-Optimierung landwirtschaftlicher Arbeitsvorgänge für landwirtschaftliche Gespanne 7.

Die landwirtschaftlichen Gespanne 7 weisen eine landwirtschaftliche Arbeitsmaschine 1 und jeweils unterschiedliche landwirtschaftliche Anbaugeräte 3 auf, wobei eine Sensoranordnung 8 zur Ermittlung einer absoluten Arbeitshöhe 9 der landwirtschaftlichen Anbaugeräte 3 vorgesehen ist.

Die Sensoranordnung 8 kann als solche eigenständig oder zumindest teilweise in die landwirtschaftliche Arbeitsmaschine 1 integriert sein. Insbesondere kann die Sensor-Steueranordnung 10 der Sensoranordnung 8 beispielsweise eine Steueranordnung der landwirtschaftlichen Arbeitsmaschine 1 sein. Genauso kann diese jedoch auch aus verteilten Recheneinheiten bestehen. Sie kann beispielsweise eine Steuereinheit der landwirtschaftlichen Arbeitsmaschine 1 und eine Cloud-Steuereinheit aufweisen.

Das landwirtschaftliche Gespann 7 weist eine Gespann-Steueranordnung 11 auf. Die Sensoranordnung 8 weist einen Sensor 12 zur Ermittlung von die absolute Arbeitshöhe 9 betreffenden Messdaten, eine Sensorhalterung 13 und eine Sensor-Steueranordnung 10 auf.

Mittels des Sensors 12 wird eine absolute Arbeitshöhe 9 gemessen. Unter dem Begriff "absolut" wird nicht zwingend eine hochgenaue Messung verstanden, sondern allgemeine eine Messung relativ zum Boden. Dabei ist grundsätzlich denkbar, dass die Messung relativ zu einem Bauteil erfolgt, dessen Höhe relativ zum Boden wiederum bekannt ist, vorzugsweise wird die absolute Arbeitshöhe 9 jedoch direkt relativ zum Boden gemessen. Es kann sich auch um eine Arbeitstiefe handeln, wenn das Anbaugerät 3 in den Boden eingreift. Grundsätzlich betrifft die Arbeitshöhe 9 ein Bauteil des landwirtschaftlichen Anbaugerätes 3, das zur Feldbearbeitung dient. Diese Feldbearbeitung kann allerdings auch eine Aussaat oder dergleichen sein. Beispielsweise betrifft die absolute Arbeitshöhe 9 also den Abstand einer Pflugschar 14 zum Boden, in diesem Fall dann zumeist als Arbeitstiefe, den Abstand eines Auslasses eines Düngerstreuers oder Spritzgerätes zum Boden oder dergleichen. Im Fokus eines besonders bevorzugten Ausführungsbeispiels stehen hier die Bodenbearbeitungsgeräte, weshalb die Arbeitshöhe 9 vorzugsweise eine Arbeitstiefe ist.

Die Gespann-Steueranordnung 11 und die Sensor-Steueranordnung 10 können einander teilweise überlappen oder identisch sein.

Der Sensor 12 nimmt im an einer Montageposition 15 montierten Zustand eine absolute Arbeitshöhe 9 des jeweiligen Anbaugerätes 3 betreffende Messdaten auf und überträgt diese an die Gespann-Steueranordnung 11, wobei die Gespann-Steueranordnung 11 während des Arbeitsvorgangs Maschinenparameter des jeweiligen landwirtschaftlichen Gespanns 7 basierend auf einem Optimierungsdatensatz und den Messdaten steuert und/oder regelt.

Die Montageposition 15 kann am Anbaugerät 3 oder der landwirtschaftlichen Arbeitsmaschine 1 angeordnet sein. Sie kann fest oder variabel sein. Bevorzugt wird die Montageposition 15 an den Arbeitsvorgang angepasst, wie im Rahmen der modularen Sensorik noch erläutert wird. Genauso kann der Sensor 12 jedoch auch fest an der landwirtschaftlichen Arbeitsmaschine 1 verbleiben.

Die Übertragung der Messdaten von dem Sensor 12 an die Gespann-Steueranordnung 11 kann grundsätzlich auf beliebige Art und Weise stattfinden. Insbesondere muss der Sensor 12 die Daten nicht aktiv senden, sie können auch ausgelesen werden. Vorzugsweise findet die Übertragung regelmäßig und/oder kontinuierlich statt.

Weiter ist eine Optimierungs-Steueranordnung 16 vorgesehen, die in einer Optimierungsroutine vor Durchführung des Arbeitsvorgangs aus konkurrierenden Optimierungszielen, gespannfernen Optimierungsdaten und das Gespann 7 betreffenden Optimierungsdaten den Optimierungsdatensatz ermittelt und der Gespann-Steueranordnung 11 zur Verfügung stellt.

Der Optimierungsdatensatz weist Vorschläge für hinsichtlich der Optimierungsziele optimierte Einstellungen von Maschinenparametern des landwirtschaftlichen Gespanns 7 in Abhängigkeit von anderen Maschinenparametern des landwirtschaftlichen Gespanns 7 und/oder Messdaten des landwirtschaftlichen Gespanns 7 auf.

Unter optimierten Einstellungen sind dabei selbstverständlich nicht zwingend die vollständig optimalen Einstellungen zu verstehen, sondern nur solche, die optimiert wurden. Die Qualität der Optimierung hängt dabei von vielen Faktoren und nicht zuletzt auch von den Zielvorgaben der Optimierung ab.

Die Optimierungs-Steueranordnung 16 ist hier und vorzugsweise teilweise oder vollständig gespannfern angeordnet.

Möglich Optimierungsziele sind beispielsweise eine Kosteneffizienz und eine Geschwindigkeit der Durchführung des Arbeitsvorgangs.

Bezüglich der Vorschläge ist es hier grundsätzlich so, dass diese dem Benutzer 17 angezeigt werden können, der sie annimmt, ablehnt oder abändert. Einige oder alle der Vorschläge können aber auch automatisch umgesetzt werden.

Vorzugsweise sind zumindest einige der Anbaugeräte 3 eigene Fahrzeuge mit mindestens einer eigenen Achse und eigenen Rädern. Zusätzlich oder alternativ kann das Anbaugerät 3 ohne Achse oder Räder ausgestaltet sein und vom Traktor oder einem anderen Anbaugerät 3 getragen werden. Diesbezüglich wird auf die bereits erwähnten Geräteschnittstellen 2 verwiesen.

Wesentlich ist nun, dass die Sensoranordnung 8 eingerichtet ist, die absolute Arbeitshöhe 9 mehrerer unterschiedlicher Anbaugeräte 3 mittels desselben Sensors 12 zu ermitteln und dass der Optimierungsdatensatz einen Vorschlag für eine hinsichtlich der Optimierungsziele optimierte Arbeitshöhe 9 des Anbaugerätes 3 und/oder Vorschläge für von einer eingestellten Arbeitshöhe 9 abhängige, hinsichtlich der Optimierungsziele optimierte Einstellungen anderer Maschinenparameter des landwirtschaftlichen Gespanns 7 aufweist. Somit wird grundsätzlich die ermittelte Arbeitshöhe 9 bei der Optimierung berücksichtigt, wobei sie direkt gesteuert oder geregelt werden kann oder als Grundlage für eine Steuerung oder Regelung dient.

Die Arbeitshöhe 9 als solche kann einen Einfluss auf diverse Optimierungsziele haben. Bei einem Pflug 6 beispielsweise hat die Arbeitshöhe 9, dort Arbeitstiefe, einen wesentlichen Einfluss auf die Qualität der Feldbearbeitung und auf den Kraftstoffverbrauch. Auch die Geschwindigkeit der Feldbearbeitung und die Möglichkeit, Energie der landwirtschaftlichen Arbeitsmaschine 1 auf andere Arbeitsaggregate zu verteilen, hängen von der Arbeitshöhe 9 ab. Je tiefer beispielsweise ein Pflug 6 pflügt, desto langsamer muss das Gespann 7 physikalisch durch die Motorleistung bedingt fahren.

Optimierungsdaten des Gespanns 7 können beispielsweise Maschinenparameter, Abhängigkeiten der Maschinenparameter untereinander wie die Abhängigkeit des Kraftstoffverbrauchs von der Arbeitshöhe 9, eine Kinematik des Anbaugerätes 3 und dergleichen sein. Die gespannfernen Optimierungsdaten können einen Kraftstoffverbrauch abhängig von Eigenschaften des Bodens oder des Feldes allgemein, das Wetter und einen Einfluss des Wetters auf die Feldbearbeitung und dergleichen umfassen.

Der Optimierungsdatensatz kann beispielsweise ein Gleichungssystem in Form von Kennfeldern aufweisen, in dem einige Optimierungsziele noch variabel sind und vor Ort gewählt werden können, während diverse Faktoren bereits fest berücksichtigt sind. Alternativ oder zusätzlich kann der Optimierungsdatensatz die Grundlage für die Berechnung von Kennfeldern durch insbesondere die Gespann-Steueranordnung 11 bilden.

Es kann vorgesehen sein, dass der Sensor 12 reversibel an den Anbaugeräten 3 montierbar ist und dass der Sensor 12 zur Ermittlung der Arbeitshöhe 9 mehrerer Anbaugeräte 3 genutzt wird und dafür jeweils an dem Anbaugerät 3 montiert wird. Vorzugsweise ist es dann so, dass der Sensor 12 mittels der mindestens einen Sensorhalterung 13 jeweils an einer Montageposition 15 an unterschiedlichen Anbaugeräten 3 reversibel montiert wird, dass die Sensorhalterung 13 vom Sensor 12 getrennt an den unterschiedlichen Anbaugeräten 3 montierbar ist und der Sensor 12 reversibel an der Sensorhalterung 13 montierbar ist. Fig. 2 zeigt dazu diverse mögliche Montagepositionen 15, jeweils mit einem Sensor 12 bestückt. Es ist jedoch durchaus vorgesehen, häufig nur wenige der möglichen Montagepositionen 15 tatsächlich zu bestücken.

Weiter ist hier und vorzugsweise vorgesehen, dass der Sensor 12 ein, insbesondere kontaktloser, Abstandssensor ist, vorzugsweise, dass der Abstandssensor auf Basis elektromagnetischer Wellen oder akustischer Wellen oder mechanischer Abtastung funktioniert, weiter vorzugsweise, dass der Abstandssensor ein Radar-Sensor oder ein Lidar-Sensor oder ein optischer Sensor oder ein Ultraschall-Sensor ist, oder, dass der Sensor 12 ein Sensor 12, insbesondere Kraftsensor oder Wegsensor, an einem den Boden berührenden Bauteil, insbesondere einem Tastbügel, einer Schleifkufe oder einer Stützrolle, ist.

Hier und vorzugsweise ermittelt die Sensor-Steueranordnung 10 und/oder die Gespann-Steueranordnung 11 aus einem montagepositionsspezifischen Kalibrationsdatensatz die Arbeitshöhe 9 des jeweiligen Anbaugerätes 3. Insgesamt können alle für die Sensor-Steueranordnung 10 beschriebenen Funktionen auch von der Gespann-Steueranordnung 11 übernommen werden oder beide können durch eine gemeinsamen Steueranordnung gebildet sein.

Die reversible Montage des Sensors 12 mittels der Sensorhalterung 13 an der Montageposition 15 erfolgt derart, dass die Montage zerstörungsfrei reversibel ist. Insbesondere erfolgt sie auch nicht im Rahmen der Herstellung des Anbaugerätes 3, sondern ist vorzugsweise vor Ort auf dem Feld mit einfachen Hilfsmitteln oder ganz ohne Hilfsmittel möglich.

Der montagepositionsspzifische Kalibrationsdatensatz kann, wie noch erläutert wird, grundsätzlich in einem beliebigen Speicher hinterlegt sein, neu erstellt werden oder der Sensor-Steueranordnung 10 anderweitig zur Verfügung stehen.

Eine vorteilhafte Anwendung der modularen Sensorik betrifft auch die Messung der Arbeitshöhe 9 bei einem Anbaugerät 3, das keine eigene Elektronik aufweist. Wie sich im Folgenden noch ergibt, kann die Sensoranordnung 8 insofern autark von dem Anbaugerät 3 sein. Alternativ kann vorgesehen sein, dass der Sensor 12 nicht mit dem Anbaugerät 3 kommuniziert. Genauso kann jedoch vorgesehen sein, dass der Sensor 12 in eine Elektronik des Anbaugerätes 3 integriert wird oder mit dieser kommuniziert. Auch bei Anbaugeräten 3 mit Elektronik kann jedoch vorgesehen sein, dass der Sensor 12 nicht direkt mit dem Anbaugerät 3 kommuniziert. Bevorzugt ist, dass die Sensoranordnung 8 mit Anbaugeräten 3 mit und ohne Elektronik verwendbar ist. Insgesamt kann sogar vorgesehen sein, dass die Ermittlung der Arbeitshöhe 9, abgesehen von der Kalibration selbst, vollständig unabhängig von dem landwirtschaftlichen Anbaugerät 3 ist.

Vorzugsweise ist es so, dass die montagepositionsspezifischen Kalibrationsdatensätze eine Referenzhöhe und/oder eine Ausrichtung des Sensors 12 im montierten Zustand an der jeweiligen Montageposition 15 und/oder eine Lokalisierung der Montageposition 15 relativ zum Anbaugerät 3 umfassen.

Die Referenzhöhe kann aus einer noch zu erläuternden Kalibrationsroutine stammen und betrifft eine Höhe der Montageposition 15 des Sensors 12 in einem Referenzzustand, vorzugsweise bei einer bekannten Arbeitshöhe 9. Die Ausrichtung des Sensors 12 kann beispielsweise eine Verkippung des Sensors 12 sein. Damit kann berücksichtigt sein, dass der Sensor 12 gegebenenfalls nicht den kürzesten Abstand zum Boden misst. Die Lokalisierung der Montageposition 15 relativ zum Anbaugerät 3 kann aus einer Gruppe von vorgegebenen Montagepositionen 15 gewählt sein oder anderweitig bestimmt werden. Fig. 1 beispielsweise stellt zwei Montagepositionen 15 an einem Pflug 6 dar. Auch Fig. 2 zeigt mehrere mögliche Montagepositionen 15 an unterschiedlichen Anbaugeräten 3. Wie noch erläutert wird, ergibt sich auch die Möglichkeit, pro Anbaugerät 3 mehrere Arbeitshöhen 9 zu messen und so beispielsweise eine Neigung des Anbaugerätes 3 zu erfassen. Dafür kann die Lokalisierung der Montageposition 15 eines oder mehrerer Sensoren 12 notwendig sein.

Es kann vorgesehen sein, dass die montagepositionsspezifischen Kalibrationsdatensätze in einem Speicher der Sensor-Steueranordnung 10 hinterlegt sind. Dieser Speicher ist hier und vorzugsweise ein lokaler Speicher der landwirtschaftlichen Arbeitsmaschine 1. Grundsätzlich kommt jedoch auch ein Cloud-Speicher oder dergleichen in Betracht. In dem Speicher können Kalibrationsdatensätze betreffend Montagepositionen 15 an mindestens zwei, vorzugsweise mindestens drei, unterschiedlichen Typen von Anbaugeräten 3 hinterlegt sein.

Hier und vorzugsweise umfassen die Anbaugeräte 3 unterschiedliche Typen von Anbaugeräten 3, für die die jeweilige Steueranordnung 10, 11 jeweils eine Arbeitshöhe 9 ermittelt. Die unterschiedlichen Typen von Anbaugeräten 3 umfassen vorzugsweise mindestens einen Typ Bodenbearbeitungsgerät, weiter vorzugsweise mindestens zwei Typen Bodenbearbeitungsgeräte. Die Typen Bodenbearbeitungsgeräte umfassen vorzugsweise einen Pflug 6 und/oder einen Grubber und/oder eine Egge. Die unterschiedliche Typen von Anbaugeräten 3 umfassen vorzugsweise einen Kunstdüngerstreuer 5 und/oder eine Sämaschine, insbesondere eine Säschar, und/oder ein Mähwerk und/oder eine Pickup und/oder ein Anbaugerät 3 mit einer Pickup, insbesondere eine Ballenpresse 4 oder einen Ladewagen.

Wie im unteren Bereich von Fig. 1 gezeigt, ist hier und vorzugsweise vorgesehen, dass die Sensorhalterung 13 vom Sensor 12 getrennt an den unterschiedlichen Anbaugeräten 3 montierbar ist. Der Sensor 12 ist dann reversibel an der Sensorhalterung 13 montierbar. Es kann grundsätzlich vorgesehen sein, dass die Sensorhalterung 13 ein relativ günstiges Massenbauteil ist, während der Sensor 12 selbst relativ teuer ist. Das vorschlagsgemäße Verfahren ermöglicht die Wiederverwendung des teuren Sensors 12.

Aus Komfortgründen kann vorgesehen sein, dass die Sensorhalterung 13 an dem Anbaugerät 3 verbleibt. Dies hat zum einen im Rahmen der noch zu erläuternden Kalibrationsroutine deutliche Vorteile, ermöglicht jedoch zum anderen auch, die Sensorhalterung 13 stabil und aufwändiger zu montieren, während die Montage des Sensors 12 an der Sensorhalterung 13 selbst vorzugsweise relativ einfach ist. Dies ermöglicht auch die Wiederverwendung derselben Montageposition 15 bei erneutem Anbringen des Sensors 12. Entsprechend kann der montagepositionsspezifische Kalibrationsdatensatz auch der Sensorhalterung 13 an der entsprechenden Montageposition 15 zugeordnet sein. Um diese Zuordnung nun abzubilden, kann vorgesehen sein, dass die Sensorhalterung 13 ein Identifikationsmerkmal 18 aufweist.

Das Identifikationsmerkmal 18 kann von der Sensorhalterung 13 an die Sensor-Steueranordnung 10 übertragen werden. In manchen Ausführungsbeispielen weist diese Sensorhalterung 13 jedoch keine eigene Elektronik auf. Insbesondere deshalb kann auch vorgesehen sein, dass der Sensor 12, insbesondere im montierten Zustand, das Identifikationsmerkmal 18 ausliest und an die Sensor-Steueranordnung 10 überträgt. Vorzugsweise weist die Sensorhalterung 13 einen NFC-Tag auf. Der Sensor 12 kann dann einen NFC-Leser aufweisen, mittels dessen der Sensor 12 das Identifikationsmerkmal 18 der Sensorhalterung 13 ausliest und an die Sensor-Steueranordnung 10 überträgt. Alternativ kann auch vorgesehen sein, dass der Benutzer 17 das Identifikationsmerkmal 18 über ein Eingabegerät, insbesondere ein Smartphone, eingeben oder mit dem Smartphone auslesen kann. Das Eingabegerät kommuniziert dann mit der Sensor-Steueranordnung 10 oder ist Teil der Sensor-Steueranordnung 10. Das Identifikationsmerkmal 18 kann somit insbesondere auch ein QR-Code sein, den der Benutzer 17 beispielsweise in einer dedizierten App ausliest. All diese Möglichkeiten erlauben eine schnelle Montage des Sensors 12, die direkt zur Nutzbarkeit des Sensors 12 zur Ermittlung der Arbeitshöhe 9 führt. Statt eines Smartphones kann auch ein Tablet, ein Laptop, eine Smartwatch oder dergleichen verwendet werden

Zusätzlich oder alternativ kann vorgesehen sein, dass ein Benutzer 17 den montagepositionsspezifischen Kalibrationsdatensatz an einer Eingabeeinheit, vorzugsweise einer Eingabeeinheit einer landwirtschaftlichen Arbeitsmaschine 1, die mit der Sensor-Steueranordnung 10 kommuniziert, auswählt, oder, dass die Sensor-Steueranordnung 10 den montagepositionsspezifischen Kalibrationsdatensatz auf Basis des Identifikationsmerkmal 18 automatisch auswählt.

Weiter ist hier und vorzugsweise vorgesehen, dass die Sensor-Steueranordnung 10 eine Kalibrationsroutine durchführt, in der die Sensor-Steueranordnung 10 einen montagepositionsspezifischen Kalibrationsdatensatz erzeugt und vorzugsweise in dem Speicher abspeichert. Diese Kalibrationsroutine wird in Folgenden näher erläutert. Vorzugsweise ist vorgesehen, dass in der Kalibrationsroutine die Sensor-Steueranordnung 10 eine Referenzhöhe und/oder eine Ausrichtung des Sensors 12 im montierten Zustand an der jeweiligen Montageposition 15 und/oder eine Lokalisierung der Montageposition 15 relativ zum Anbaugerät 3 in dem montagepositionsspezifischen Kalibrationsdatensatz abspeichert.

Die Kalibrationsroutine wird hier und vorzugsweise auf ebenem Grund durchgeführt. Dabei kann die Sensor-Steueranordnung 10 dem Benutzer 17 mitteilen, dass er die landwirtschaftliche Arbeitsmaschine 1 und/oder das Anbaugerät 3 auf ebenem Grund abstellen soll und/oder annehmen, dass dies geschehen ist. Weiter ist vorzugsweise vorgesehen, dass das Anbaugerät 3 eine Referenzhöhe einnimmt. Beim Pflug 6 kann die Referenzhöhe beispielsweise bei einer Arbeitshöhe 9 von null festgelegt werden, wenn die Pflugscharen 14 auf dem Boden abgestellt sind. Bei einer Säeinrichtung beispielsweise kann es jedoch auch vorkommen, dass die niedrigste, einstellbare Höhe und eine übliche Arbeitshöhe 9 zu weit auseinander liegen, um den Sensor 12 so zu kalibrieren und während der Nutzung dennoch innerhalb der Spezifikation des Sensors 12 zu bleiben. Daher kann genauso vorgesehen sein, dass der Benutzer 17 die Referenzhöhe eingeben oder anderweitig bestimmen muss.

Vorzugsweise misst die Sensor-Steueranordnung 10 mittels des Sensors 12 in der Kalibrationsroutine einen Abstand des Sensors 12 zum Boden und speichert diesen als Referenzhöhe ab. Besonders interessant daran ist, dass die Montageposition 15, die von der Sensor-Steueranordnung 10 vorgegeben werden kann, vom Benutzer 17, insbesondere in Höhenrichtung, nicht genau eingehalten werden muss, da sie sich bei der Ermittlung der Arbeitshöhe 9 aus der Referenzhöhe herauskürzt. Auch in andere Richtungen kommt es aufgrund der in der Landwirtschaft vorherrschenden Toleranzen zumeist nicht auf eine hohe Präzision an.

Sofern das Anbaugerät 3 eigene Einstellmöglichkeiten der Arbeitshöhe 9 aufweist, kann vorgesehen sein, dass die während der Kalibrationsroutine vorliegenden Einstellungen ebenfalls in dem montagepositionsspezifischen Kalibrationsdatensatz abgespeichert werden und Änderungen dieser Einstellungen können zu einer Warnung an den Benutzer 17 führen oder über den Optimierungsdatensatz bei der Ermittlung der Arbeitshöhe 9 berücksichtigt werden.

Weiter ist hier und vorzugsweise vorgesehen, dass die Sensor-Steueranordnung 10 einen Benutzer 17 mittels einer Ausgabeeinheit in einem natürlichsprachigen Dialog durch die Kalibrationsroutine leitet, vorzugsweise, dass die Sensor-Steueranordnung 10 dem Benutzer 17 eine Montageposition 15 vorgibt oder der Benutzer 17 die Montageposition 15, vorzugsweise per Spracheingabe, an die Sensor-Steueranordnung 10 übermittelt. Zusätzlich oder alternativ kann vorgesehen sein, dass die Sensor-Steueranordnung 10 dem Benutzer 17 eine Einstellung einer Arbeitshöhe 9 des Anbaugerätes 3 vorgibt oder der Benutzer 17 die Einstellung einer Arbeitshöhe 9, vorzugsweise per Spracheingabe, an die Sensor-Steueranordnung 10 übermittelt, und/oder, dass die Sensor-Steueranordnung 10 dem Benutzer 17 vorgibt, die landwirtschaftliche Arbeitsmaschine 1 und/oder das Anbaugerät 3 auf ebenem Grund abzustellen.

Der Dialog kann mittels eines Sprachausgabegerätes und/oder Spracheingabegerätes der landwirtschaftlichen Arbeitsmaschine 1 und/oder eines Smartphones durchgeführt werden. Genauso kann jedoch auch ein Terminal der landwirtschaftlichen Arbeitsmaschine 1 und/oder das Smartphone ohne Spracheingabe und/oder -ausgabe verwendet werden.

Hier und vorzugsweise ist vorgesehen, dass die landwirtschaftliche Arbeitsmaschine 1 und/oder das Anbaugerät 3 während der Kalibrationsroutine auf ebenem Untergrund steht, dass der Benutzer 17 die Sensorhalterung 13 an einer Montageposition 15 an einem landwirtschaftlichen Anbaugerät 3 montiert und den Sensor 12 mit der Sensorhalterung 13 verbindet und dass die Sensor-Steueranordnung 10 eine Kalibrationsroutine durchführt, in der die Sensor-Steueranordnung 10 eine Referenzhöhe ermittelt und einen montagepositionsspezifischen Kalibrationsdatensatz erzeugt und vorzugsweise in dem Speicher hinterlegt.

Die Ausgabeeinheit kann das Terminal oder das Smartphone sein und/oder das Sprachausgabegerät aufweisen.

Es kann vorgesehen sein, dass der Sensor 12 form- und/oder kraftschlüssig an der Sensorhalterung 13 montierbar ist, vorzugsweise, dass der Sensor 12 mittels einer Schnellspanneinrichtung und/oder mittels einer oder mehrerer Schrauben und/oder magnetisch an der Sensorhalterung 13 montierbar ist und/oder in die Sensorhalterung 13 einclipsbar ist. Bevorzugt ist der Sensor 12 mit handelsüblichem Werkzeug oder ganz ohne Werkzeug an der Sensorhalterung 13 montierbar.

Weiter ist hier und vorzugsweise vorgesehen, dass die Sensorhalterung 13 eine Batterie und/oder eine elektrische Verbindungseinheit, insbesondere ein Kabel oder eine Antenne, zur Verbindung mit der Steueranordnung und/oder zur Energieübertragung von einer landwirtschaftlichen Arbeitsmaschine 1 an den Sensor 12, aufweist, vorzugsweise, dass die elektrische Verbindungseinheit eine Busanbindung, insbesondere eine ISOBUS- oder CAN Busanbindung, aufweist.

Mittels einer derart ausgestalteten Sensorhalterung 13 kann insbesondere der Sensor 12 mit Energie versorgt werden. Gleichzeitig oder alternativ kann die Sensorhalterung 13 so genutzt werden, um die Daten von dem Sensor 12 an die Sensor-Steueranordnung 10 zu übertragen. Besonders interessant ist das, wenn die Sensor-Steueranordnung 10 Teil der landwirtschaftlichen Arbeitsmaschine 1 ist oder die Verbindung zur Sensor-Steueranordnung 10 über die landwirtschaftliche Arbeitsmaschine 1 läuft. Weist die Sensorhalterung 13 ein Kabel auf, das gegebenenfalls mit einem Bus der landwirtschaftlichen Arbeitsmaschine 1 verbindbar ist, und verbleibt die Sensorhalterung 13 an dem landwirtschaftlichen Anbaugerät 3, muss die Verkabelung nur einmal vorgenommen werden. Damit wird das "plug and play"-Konzept der Sensoranordnung 8 konsequent weitergedacht. Die Batterie kann selbstverständlich alternativ ein Akku sein. Genauso kann der Sensor 12 auch eine eigene Batterie oder einen eigenen Akku aufweisen. Insbesondere ist auch denkbar, dass die Sensorhalterung 13 keinerlei Elektronik aufweist, wobei der NFC-Tag nicht als Elektronik zählt. Sofern das Anbaugerät 3 über eine eigene Energieversorgung verfügt, die gegebenenfalls von der landwirtschaftlichen Arbeitsmaschine 1 gespeist wird, kann der Sensor 12, insbesondere über die Sensorhalterung 13, auch mit dieser verbunden werden.

Wie bereits angedeutet, weisen diverse landwirtschaftliche Anbaugeräte 3 unterschiedliche relevante Arbeitshöhen 9 auf. Beispielhaft ist in Fig. 2a ein Pflug 6 mit mehreren Pflugscharen 14 dargestellt. Jede dieser Pflugscharen 14 weist eine eigene Arbeitshöhe 9 auf. Wenn der Pflug 6 beispielsweise entlang seiner Längsachse stark geneigt ist, würde das Optimieren nur einer Arbeitshöhe 9 nicht zu optimalen Ergebnissen führen.

Es kann vorgesehen sein, dass die Sensor-Steueranordnung 10 die Arbeitshöhe 9 zusätzlich aus einem anbaugerätespezifischen Kalibrationsdatensatz ermittelt und der anbaugerätespezifische Kalibrationsdatensatz eine Kinematik des jeweiligen Anbaugerätes 3 umfasst, und/oder, dass die Steueranordnung die Arbeitshöhe 9 zusätzlich aus einem Kopplungsdatensatz ermittelt und der Kopplungsdatensatz Maschinenparameter einer Geräteschnittstelle 2 zwischen der landwirtschaftlichen Arbeitsmaschine 1 und dem jeweiligen Anbaugerät 3 umfasst, vorzugsweise, dass der Kopplungsdatensatz Maschinenparameter eines Dreipunkt-Krafthebers umfasst.

Mittels des anbaugerätespezifischen Kalibrationsdatensatzes und Kopplungsdatensatzes kann beispielsweise über eine Achstransformation mit Hilfe der Kinematik des Anbaugerätes 3 oder über bekannte Maschinenparameter der Geräteschnittstelle 2 die Anzahl an notwendigen Sensoren 12 zur Ermittlung mehrerer Arbeitshöhen 9 reduziert werden. Auch die Ermittlung einer einzelnen Arbeitshöhe 9 kann so gegebenenfalls verifiziert oder genauer vorgenommen werden. In einem bevorzugten Ausführungsbeispiel kann allerdings mindestens eine Arbeitshöhe 9 ohne Berücksichtigung der Maschinenparameter der Geräteschnittstelle 2 ermittelt werden.

Grundsätzlich kann der anbaugerätespezifische Kalibrationsdatensatz in dem montagepositionsspezifischen Kalibrationsdatensatz enthalten sein oder andersrum. Der Kopplungsdatensatz kann anbaugerätespezifisch sein, muss dies jedoch nicht. Beispielsweise kann dieser Längen von Hydraulikzylindern der Geräteschnittstelle 2 umfassen. Allgemein sind unter Maschinenparametern sämtliche Einstellungen, zugehörige Sensormesswerte und dergleichen zu verstehen. Hier und vorzugsweise betreffen die Maschinenparameter zumindest teilweise Maschinenparameter, die einen direkten Einfluss auf die Arbeitshöhe 9, die ermittelt werden soll, haben.

Weiter ist hier und vorzugsweise vorgesehen, dass der Optimierungsdatensatz Kennfelder aufweist, die die Abhängigkeiten der Einstellungen von Maschinenparametern, insbesondere der Arbeitshöhe 9, des landwirtschaftlichen Gespanns 7 von anderen Maschinenparametern des landwirtschaftlichen Gespanns 7 und/oder Messdaten des landwirtschaftlichen Gespanns 7 abbilden und dass die Gespann-Steueranordnung 11 das landwirtschaftliche Gespann 7 in einem Arbeitsbereich der Kennfelder basierend auf den Kennfeldern steuert und bei Verlassen des Arbeitsbereichs der Kennfelder die Kennfelder anpasst.

Kennfelder sind Gleichungen oder Kombinationen aus Gleichungen und/oder Ungleichungen oder anderweitig abgebildeten Abhängigkeiten zwischen Einstellungen von Maschinenparametern, Messdaten, Einflussfaktoren und dergleichen. Hier und vorzugsweise umfasst mindestens ein Kennfeld die Abhängigkeit der Arbeitshöhe 9 von Maschinenparametern und/oder Feldparametern. So ist die Arbeitshöhe 9 zum Beispiel abhängig von Einstellungen der Geräteschnittstelle 2. Die Arbeitshöhe 9 selbst beeinflusst wiederum den Kraftstoffverbrauch, eine Arbeitsqualität, etc. Die Kennfelder sind nun so ausgestaltet, dass sie hinsichtlich einiger Einflussfaktoren eine Konstanz annehmen und dafür bei anderen Einflussfaktoren flexibel sind. Sie umfassen Eingangsparameter und Ausgangsparameter, wobei die Eingangsparameter beispielsweise Messdaten sind und die Ausgangsparameter Einstellungen für Maschinenparameter. Da die Kennfelder vorberechnet sind, wird innerhalb des Arbeitsbereiches mit relativ wenig Rechenleistung eine Optimierung der Ausgangsparameter erzielt. Ändern sich die Grundannahmen der Kennfelder zu sehr, können die Kennfelder angepasst werden.

Es kann vorgesehen sein, dass der Optimierungsdatensatz montagepositionsabhängig ist, vorzugsweise, dass der Optimierungsdatensatz mindestens ein montagepositionsabhängiges Kennfeld aufweist, weiter vorzugsweise, dass das montagepositionsabhängige Kennfeld Einstellungen von Maschinenparametern des landwirtschaftlichen Gespanns 7 abhängig von der Arbeitshöhe 9 an der Montageposition 15 abbildet.

Hier und vorzugsweise ist es so, dass der Optimierungsdatensatz Vorschläge für von der eingestellten Arbeitshöhe 9 abhängige Einstellungen für eine Motorregelung und/oder eine Fahrregelung und/oder eine Getrieberegelung und/oder eine Lüfterregelung und/oder für eine Regelung der Geräteschnittstelle 2, vorzugsweise eine Zugkraftregelung und/oder eine Schlupfregelung und/oder eine Lageregelungen und/oder eine Mischregelungen der Zugkraft- und Lageregelung, und/oder für eine Auflagedruckregelung und/oder eine Rückverfestigungsdruckregelung und/oder eine Aussaatstärkenregelung des landwirtschaftlichen Anbaugerätes 3 umfasst. Auch denkbar ist, dass der Optimierungsdatensatz Vorschläge für eine Aufbaufederung und/oder einen Reifendruck umfasst.

Landwirtschaftliche Gespanne 7 weisen üblicherweise diverse Regelungssysteme auf. Es ist nicht zweckmäßig, daraus eine Gesamtregelung zu erstellen. Vielmehr werden hier und vorzugsweise Vorschläge für Einstellungen dieser Regelungen aus dem Optimierungsdatensatz hergeleitet. Interessant ist dabei insbesondere auch die Möglichkeit, die Geräteschnittstelle 2 der landwirtschaftlichen Arbeitsmaschine 1, deren Regelung einen direkten Einfluss auf die Arbeitshöhe 9 haben kann, zu berücksichtigen.

Weiter ist hier und vorzugsweise vorgesehen, dass die Optimierungs-Steueranordnung 16 in der Optimierungsroutine Vorschläge für eine optimierte Auswahl einer oder mehrerer landwirtschaftlicher Arbeitsmaschinen 1 und/oder landwirtschaftlicher Anbaugeräte 3 und/oder landwirtschaftlicher Gespanne 7 für den Arbeitsvorgang ermittelt, und/oder, dass die Optimierungs-Steueranordnung 16 in der Optimierungsroutine Vorschläge für eine optimierte Auswahl eines oder mehrerer Sensoren 12 und/oder Sensortypen und/oder Montagepositionen 15 und/oder eine Sensoranzahl der Sensoranordnung 8 ermittelt.

Die Auswahl der richtigen landwirtschaftlichen Arbeitsmaschine 1 und/oder des richtigen landwirtschaftlichen Anbaugerätes 3 für einen Arbeitsvorgang oder die Optimierung mehrerer Arbeitsvorgänge und die Verteilung der Ressourcen auf die Arbeitsvorgänge birgt besonderes Potential. In Verbindung mit der modularen Sensorik ergibt sich daher die Möglichkeit einer Gesamtoptimierung der Arbeitsvorgänge. Vorhandene Sensoren 12 können abhängig von den Optimierungszielen auf die landwirtschaftlichen Arbeitsmaschinen 1 und die landwirtschaftlichen Anbaugeräte 3 und die Montagepositionen 15 verteilt werden. Sind unterschiedliche Typen von Sensoren 12 vorhanden, kann dies auch berücksichtigt werden. Dabei kann auf die Möglichkeiten der Optimierung vor Ort durch die Optimierungsdatensätze der gebildeten Gespanne 7 Rücksicht genommen werden. Die Sensoren 12 können beispielsweise dort eingesetzt werden, wo ihre Messdaten einen höheren Erfolg erzielen können. Die Kennfelder wiederum können derart ermittelt werden, dass sie die vorhandene Sensorik und die allgemeine Planung berücksichtigen. Sie können entsprechend abhängig von einigen oder allen der genannten Vorschläge ermittelt werden.

Hier und vorzugsweise, ermittelt die Optimierungs-Steueranordnung 16 in der Optimierungsroutine den Optimierungsdatensatz abhängig von Gewichtungen von Zielvorgaben. Vorzugsweise ist es dabei so, dass die Gewichtung der Zielvorgaben in die Kennfelder einfließt, weiter vorzugsweise, dass Änderungen der Gewichtung zumindest einiger Zielvorgaben während der Durchführung des Arbeitsvorgangs keine Änderung der Kennfelder erzwingen.

Die Gewichtungen der Zielvorgaben können vom Benutzer 17 vorgegeben werden oder bereits bekannt sein. Sie können auch automatisch ermittelt werden. Hier und vorzugsweise ist es dabei so, dass eine Änderung der Zielvorgaben, insbesondere durch den Benutzer 17, im Normalfall, vorzugsweise nie, zu einer Änderung der Kennfelder führt. Es ist also so, dass die möglichen Änderungen einiger Zielvorgaben in den Kennfeldern bereits berücksichtigt sind.

Weiter ist hier und vorzugsweise vorgesehen, dass der Benutzer 17 während des Arbeitsvorgangs dialogbasiert Gewichtungen der Zielvorgaben für die Steuerung und/oder Regelung des landwirtschaftlichen Gespanns 7 vorgeben kann, dass der Optimierungsdatensatz eine optimierte Arbeitshöhe 9 in Abhängigkeit von den Zielvorgaben umfasst und dass die Gespann-Steueranordnung 11 auf Basis des Optimierungsdatensatz und der Zielvorgaben eine optimierte Arbeitshöhe 9 vorschlägt und/oder regelt.

Vorzugsweise ist es so, dass die Gespann-Steueranordnung 11 auf Basis des Optimierungsdatensatz und der Zielvorgaben und der optimierten Arbeitshöhe 9 optimierte andere Maschinenparameter vorschlägt und/oder regelt.

Hier und vorzugsweise umfassen die Zielvorgaben einen minimierten Kraftstoffverbrauch und/oder eine maximierte Geschwindigkeit der Durchführung des Arbeitsvorgangs und/oder eine Minimierung der Kosten des Arbeitsvorgangs und/oder eine Maximierung der Arbeitsqualität. Vorzugsweise kann der Benutzer 17 die Gewichtung der Zielvorgaben visuell einstellen.

Weiter ist hier und vorzugsweise vorgesehen, dass die Optimierungs-Steueranordnung 16 in der Optimierungsroutine Vorschläge für Voreinstellungen der landwirtschaftlichen Arbeitsmaschine 1 und/oder des landwirtschaftlichen Anbaugerätes 3 ermittelt, vorzugsweise, dass der Optimierungsdatensatz, insbesondere die Kennfelder, von den Vorschlägen abhängig ist.

Unter Voreinstellungen sind solche Einstellungen zu verstehen, die nicht automatisch veränderbar sind und/oder nicht während der Fahrt veränderbar sind. Insbesondere handelt es sich also um manuelle Einstellungen, die üblicherweise nur einmalig vor Beginn des Arbeitsvorgangs eingestellt werden. Dies kann manuell zu verstellende Einstellungen des Anbaugerätes 3 oder der landwirtschaftlichen Arbeitsmaschine 1 betreffen. Beispiele sind ein Achsballast oder ein Reifendruck.

Weiter ist hier und vorzugsweise vorgesehen, dass die Optimierungs-Steueranordnung 16 in der Optimierungsroutine den Optimierungsdatensatz, vorzugsweise die Kennfelder, und/oder die Vorschläge auf Basis von Eigenschaften des Feldes, vorzugsweise einer Bodenart und/oder einer Feuchtigkeit des Feldes und/oder eines Feldbestandes und/oder einer Fruchtfolge, als gespannferne Optimierungsdaten ermittelt. Zusätzlich oder alternativ kann vorgesehen sein, dass die Optimierungs-Steueranordnung 16 in der Optimierungsroutine den Optimierungsdatensatz, vorzugsweise die Kennfelder, und/oder die Vorschläge auf Basis von einer geplanten Flottengröße für den Arbeitsvorgang und/oder einem geplanten Arbeitszeitfenster und/oder geplanter weiterer Bearbeitungsschritte und/oder geplanter weiterer Bearbeitungszeiträume als gespannferne Optimierungsdaten ermittelt. Weiter können die gespannfernen Optimierungsdaten auch eine Wetterprognose enthalten.

Der Optimierungsdatensatz bildet somit gespannferne Abhängigkeiten wie beispielsweise Kosten im agronomischen Gesamtkontext ab.

Auch denkbar ist, dass die Optimierungs-Steueranordnung 16 in der Optimierungsroutine den Optimierungsdatensatz, vorzugsweise die Kennfelder, und/oder die Vorschläge auf Basis von Messdaten des Sensors 12 vergangener Arbeitsvorgänge ermittelt.

Grundsätzlich kann vorgesehen sein, dass die Messdaten zur Dokumentation gespeichert werden. Vorzugsweise werden die Messdaten des Sensors 12 allerdings für zukünftige Planungen von Arbeitsvorgängen verwendet. Der Optimierungsdatensatz kann somit beispielsweise die Arbeitstiefe eines vergangenen Pflügevorgangs berücksichtigen.

Vorgeschlagen wird außerdem gemäß einer weiteren Lehre, der eigenständige Bedeutung zukommt, eine Optimierungs-Steueranordnung 16 eingerichtet zur Verwendung in dem vorschlagsgemäßen Verfahren.

Auf alle Ausführungen zu dem vorschlagsgemäßen Verfahren darf verwiesen werden.

### Bezugszeichenliste

- 1: landwirtschaftliche Arbeitsmaschine
- 2: Geräteschnittstelle
- 3: landwirtschaftliches Anbaugerät
- 4: Ballenpresse
- 5: Kunstdüngerstreuer
- 6: Pflug
- 7: landwirtschaftliches Gespann
- 8: Sensoranordnung
- 9: Arbeitshöhe
- 10: Sensor-Steueranordnung
- 11: Gespann-Steueranordnung
- 12: Sensor
- 13: Sensorhalterung
- 14: Pflugschar
- 15: Montageposition
- 16: Optimierungs-Steueranordnung
- 17: Benutzer
- 18: Identifikationsmerkmal

## Patentansprüche

1. Verfahren zur Vorab-Optimierung landwirtschaftlicher Arbeitsvorgänge für landwirtschaftliche Gespanne (7), wobei die landwirtschaftlichen Gespanne (7) eine landwirtschaftliche Arbeitsmaschine (1) und jeweils unterschiedliche landwirtschaftliche Anbaugeräte (3) aufweisen, wobei eine Sensoranordnung (8) zur Ermittlung einer absoluten Arbeitshöhe (9) der landwirtschaftlichen Anbaugeräte (3) vorgesehen ist, wobei das landwirtschaftliche Gespann (7) eine Gespann-Steueranordnung (11) aufweist,
wobei die Sensoranordnung (8) einen Sensor (12) zur Ermittlung von die absolute Arbeitshöhe (9) betreffenden Messdaten, eine Sensorhalterung (13) und eine Sensor-Steueranordnung (10) aufweist, wobei der Sensor (12) im an einer Montageposition (15) montierten Zustand eine absolute Arbeitshöhe (9) des jeweiligen Anbaugerätes (3) betreffende Messdaten aufnimmt und an die Gespann-Steueranordnung (11) überträgt, wobei die Gespann-Steueranordnung (11) während des Arbeitsvorgangs Maschinenparameter des jeweiligen landwirtschaftlichen Gespanns (7) basierend auf einem Optimierungsdatensatz und den Messdaten steuert und/oder regelt,
wobei eine Optimierungs-Steueranordnung (16) vorgesehen ist, die in einer Optimierungsroutine vor Durchführung des Arbeitsvorgangs aus konkurrierenden Optimierungszielen, gespannfernen Optimierungsdaten und das Gespann (7) betreffenden Optimierungsdaten den Optimierungsdatensatz ermittelt und der Gespann-Steueranordnung (11) zur Verfügung stellt,
wobei der Optimierungsdatensatz Vorschläge für hinsichtlich der Optimierungsziele optimierte Einstellungen von Maschinenparametern des landwirtschaftlichen Gespanns (7) in Abhängigkeit von anderen Maschinenparametern des landwirtschaftlichen Gespanns (7) und/oder Messdaten des landwirtschaftlichen Gespanns (7) aufweist,
**dadurch gekennzeichnet,**
**dass** die Sensoranordnung (8) eingerichtet ist, die absolute Arbeitshöhe (9) mehrerer unterschiedlicher Anbaugeräte (3) mittels desselben Sensors (12) zu ermitteln und dass der Optimierungsdatensatz einen Vorschlag für eine hinsichtlich der Optimierungsziele optimierte Arbeitshöhe (9) des Anbaugerätes (3) und/oder Vorschläge für von einer eingestellten Arbeitshöhe (9) abhängige, hinsichtlich der Optimierungsziele optimierte Einstellungen anderer Maschinenparameter des landwirtschaftlichen Gespanns (7) aufweist.

2. Verfahren nach Anspruch 1, **dadurch gekennzeichnet, dass** der Sensor (12) reversibel an den Anbaugeräten (3) montierbar ist, dass der Sensor (12) zur Ermittlung der Arbeitshöhe (9) mehrerer Anbaugeräte (3) genutzt wird und dafür jeweils an dem Anbaugerät (3) montiert wird, vorzugsweise, dass der Sensor (12) mittels der mindestens einen Sensorhalterung (13) jeweils an einer Montageposition (15) an unterschiedlichen Anbaugeräten (3) reversibel montiert wird, dass die Sensorhalterung (13) vom Sensor (12) getrennt an den unterschiedlichen Anbaugeräten (3) montierbar ist und der Sensor (12) reversibel an der Sensorhalterung (13) montierbar ist.

3. Verfahren nach Anspruch 1 oder 2, **dadurch gekennzeichnet, dass** der Sensor (12) ein, insbesondere kontaktloser, Abstandssensor ist, vorzugsweise, dass der Abstandssensor auf Basis elektromagnetischer Wellen oder akustischer Wellen oder mechanischer Abtastung funktioniert, weiter vorzugsweise, dass der Abstandssensor ein Radar-Sensor oder ein Lidar-Sensor oder ein optischer Sensor oder ein Ultraschall-Sensor ist, oder, dass der Sensor (12) ein Sensor (12), insbesondere Kraftsensor oder Wegsensor, an einem den Boden berührenden Bauteil, insbesondere einem Tastbügel, einer Schleifkufe oder einer Stützrolle, ist.

4. Verfahren nach einem der vorhergehenden Ansprüche, **dadurch gekennzeichnet, dass** der Optimierungsdatensatz Kennfelder aufweist, die die Abhängigkeiten der Einstellungen von Maschinenparametern, insbesondere der Arbeitshöhe (9), des landwirtschaftlichen Gespanns (7) von anderen Maschinenparametern des landwirtschaftlichen Gespanns (7) und/oder Messdaten des landwirtschaftlichen Gespanns (7) abbilden, dass die Gespann-Steueranordnung (11) das landwirtschaftliche Gespann (7) in einem Arbeitsbereich der Kennfelder basierend auf den Kennfeldern steuert und bei Verlassen des Arbeitsbereichs der Kennfelder die Kennfelder anpasst.

5. Verfahren nach einem der vorhergehenden Ansprüche, **dadurch gekennzeichnet, dass** der Optimierungsdatensatz montagepositionsabhängig ist, vorzugsweise, dass der Optimierungsdatensatz mindestens ein montagepositionsabhängiges Kennfeld aufweist, weiter vorzugsweise, dass das montagepositionsabhängige Kennfeld Einstellungen von Maschinenparametern des landwirtschaftlichen Gespanns (7) abhängig von der Arbeitshöhe (9) an der Montageposition (15) abbildet.

6. Verfahren nach einem der vorhergehenden Ansprüche, **dadurch gekennzeichnet, dass** der Optimierungsdatensatz Vorschläge für von der eingestellten Arbeitshöhe (9) abhängige Einstellungen für eine Motorregelung und/oder eine Fahrregelung und/oder eine Getrieberegelung und/oder eine Lüfterregelung und/oder für eine Regelung der Geräteschnittstelle (2), vorzugsweise eine Zugkraftregelung und/oder eine Schlupfregelung und/oder eine Lageregelungen und/oder eine Mischregelungen der Zugkraft- und Lageregelung, und/oder für eine Auflagedruckregelung und/oder eine Rückverfestigungsdruckregelung und/oder eine Aussaatstärkenregelung des landwirtschaftlichen Anbaugerätes (3) umfasst.

7. Verfahren nach einem der vorhergehenden Ansprüche, **dadurch gekennzeichnet, dass** die Optimierungs-Steueranordnung (16) in der Optimierungsroutine Vorschläge für eine optimierte Auswahl einer oder mehrerer landwirtschaftlicher Arbeitsmaschinen (1) und/oder landwirtschaftlicher Anbaugeräte (3) und/oder landwirtschaftlicher Gespanne (7) für den Arbeitsvorgang ermittelt, und/oder, dass die Optimierungs-Steueranordnung (16) in der Optimierungsroutine Vorschläge für eine optimierte Auswahl eines oder mehrerer Sensoren (12) und/oder Sensortypen und/oder Montagepositionen (15) und/oder eine Sensoranzahl der Sensoranordnung (8) ermittelt.

8. Verfahren nach einem der vorhergehenden Ansprüche, **dadurch gekennzeichnet, dass** die Optimierungs-Steueranordnung (16) in der Optimierungsroutine den Optimierungsdatensatz abhängig von Gewichtungen von Zielvorgaben ermittelt, vorzugsweise, dass die Gewichtung der Zielvorgaben in die Kennfelder einfließt, weiter vorzugsweise, dass Änderungen der Gewichtung zumindest einiger Zielvorgaben während der Durchführung des Arbeitsvorgangs keine Änderung der Kennfelder erzwingen.

9. Verfahren nach einem der vorhergehenden Ansprüche, **dadurch gekennzeichnet, dass** der Benutzer (17) während des Arbeitsvorgangs dialogbasiert Gewichtungen der Zielvorgaben für die Steuerung und/oder Regelung des landwirtschaftlichen Gespanns (7) vorgeben kann, dass der Optimierungsdatensatz eine optimierte Arbeitshöhe (9) in Abhängigkeit von den Zielvorgaben umfasst, dass die Gespann-Steueranordnung (11) auf Basis des Optimierungsdatensatz und der Zielvorgaben eine optimierte Arbeitshöhe (9) vorschlägt und/oder regelt, vorzugsweise, dass die Gespann-Steueranordnung (11) auf Basis des Optimierungsdatensatz und der Zielvorgaben und der optimierten Arbeitshöhe (9) optimierte andere Maschinenparameter vorschlägt und/oder regelt.

10. Verfahren nach einem der vorhergehenden Ansprüche, **dadurch gekennzeichnet, dass** die Optimierungs-Steueranordnung (16) in der Optimierungsroutine Vorschläge für Voreinstellungen der landwirtschaftlichen Arbeitsmaschine (1) und/oder des landwirtschaftlichen Anbaugerätes (3) ermittelt, vorzugsweise, dass der Optimierungsdatensatz, insbesondere die Kennfelder, von den Vorschlägen abhängig ist.

11. Verfahren nach einem der vorhergehenden Ansprüche, **dadurch gekennzeichnet, dass** die Optimierungs-Steueranordnung (16) in der Optimierungsroutine den Optimierungsdatensatz, vorzugsweise die Kennfelder, und/oder die Vorschläge auf Basis von Eigenschaften des Feldes, vorzugsweise einer Bodenart und/oder einer Feuchtigkeit des Feldes und/oder eines Feldbestandes und/oder einer Fruchtfolge, als gespannferne Optimierungsdaten ermittelt, und/oder, dass die Optimierungs-Steueranordnung (16) in der Optimierungsroutine den Optimierungsdatensatz, vorzugsweise die Kennfelder, und/oder die Vorschläge auf Basis von einer geplanten Flottengröße für den Arbeitsvorgang und/oder einem geplanten Arbeitszeitfenster und/oder geplanter weiterer Bearbeitungsschritte und/oder geplanter weiterer Bearbeitungszeiträume als gespannferne Optimierungsdaten ermittelt.

12. Verfahren nach einem der vorhergehenden Ansprüche, **dadurch gekennzeichnet, dass** die Optimierungs-Steueranordnung (16) in der Optimierungsroutine den Optimierungsdatensatz, vorzugsweise die Kennfelder, und/oder die Vorschläge auf Basis von Messdaten des Sensors (12) vergangener Arbeitsvorgänge ermittelt.

13. Optimierungs-Steueranordnung eingerichtet zur Verwendung in dem Verfahren nach einem der vorhergehenden Ansprüche.

## Claims

1. A method for pre-optimizing agricultural operational procedures for agricultural combinations (7), wherein the agricultural combinations (7) have an agricultural working machine (1) and respective different agricultural attachments (3), wherein a sensor assembly (8) is provided for determining an absolute working height (9) of the agricultural attachments (3), wherein the agricultural combination (7) has a combination control assembly (11), wherein the sensor assembly (8) has a sensor (12) for determining the absolute working height (9) of relevant measurement data, a sensor holder (13) and a sensor control assembly (10), wherein, in a status mounted in a mounting position, the sensor (12) records an absolute working height (9) of the measurement data pertaining to the respective attachment (3) and transmits it to the combination control assembly (11), wherein, during the operational procedure, the combination control assembly (11) controls and/or regulates machine parameters of the respective agricultural combination (7) on the basis of an optimization data set and the measurement data, wherein an optimization control assembly (16) is provided which determines the optimization data set in an optimization routine prior to executing the operational procedure from competing optimization targets, optimization data which does not concern the combination and optimization data which does concern the combination (7) and makes it available to the combination control assembly (11),
wherein the optimization data set contains proposals for settings of machine parameters of the agricultural combination (7) optimized in terms of the optimization targets as a function of other machine parameters of the agricultural combination (7) and/or measurement data of the agricultural combination (7),
**characterized in that**
the sensor assembly (8) is configured to determine the absolute working height (9) of a plurality of different attachments (3) by means of the same sensor (12) and **in that** the optimization data set contains a proposal for a working height (9) of the attachment (3) which is optimized in terms of the optimization targets and/or proposals for settings of other machine parameters of the agricultural combination (7) which are dependent on a set working height (9) and which are optimized in terms of the optimization targets.

2. The method according to claim 1, **characterized in that** the sensor (12) can be reversibly mounted on the attachments (3), **in that** the sensor (12) is used in order to determine the working height (9) of a plurality of attachments (3) and are respectively mounted on the attachment (3) for this purpose, preferably **in that** the respective sensor (12) is reversibly mounted by means of the at least one sensor holder (13) at a mounting position (15) on different attachments (3), **in that** the sensor holder (13) can be mounted on the various attachments (3) separately from the sensor (12) and the sensor (12) can be reversibly mounted on the sensor holder (13).

3. The method according to claim 1 or claim 2, **characterized in that** the sensor (12) is a distance sensor, in particular contactless, preferably **in that** the distance sensor functions on the basis of electromagnetic waves or acoustic waves or mechanical sensing, more preferably **in that** the distance sensor is a radar sensor or a lidar sensor or an optical sensor or an ultrasonic sensor, or **in that** the sensor (12) is a sensor (12), in particular a force sensor or a position sensor, on a component which comes into contact with the ground, in particular a sensor arm, a wear skid or a support roller.

4. The method according to one of the preceding claims, **characterized in that** the optimization data set contains characteristic maps which depict the dependencies of the settings of machine parameters, in particular the working height (9), of the agricultural combination (7) on other machine parameters of the agricultural combination (7) and/or measurement data of the agricultural combination (7), **in that**, based on the characteristic maps, the combination control assembly (11) controls the agricultural combination (7) within an operating range of the characteristic maps and adapts the characteristic maps upon departing from the operating range of the characteristic maps.

5. The method according to one of the preceding claims, **characterized in that** the optimization data set is dependent on the mounting position, preferably **in that** the optimization data set has at least one characteristic map which is dependent on the mounting position, more preferably **in that** the characteristic map which is dependent on the mounting position depicts settings of machine parameters of the agricultural combination (7) as a function of the working height (9) at the mounting position (15).

6. The method according to one of the preceding claims, **characterized in that** the optimization data set comprises proposals for settings which are dependent on the set working height (9) for motor regulation and/or drive regulation and/or transmission regulation and/or fan regulation and/or for regulation of the equipment interface (2), preferably traction regulation and/or slip regulation and/or position regulations and/or a combined regulation of the traction regulation and position regulation, and/or for contact pressure regulation and/or re-compacting regulation and/or sowing rate regulation of the agricultural attachment (3).

7. The method according to one of the preceding claims, **characterized in that** in the optimization routine, the optimization control assembly (16) determines proposals for an optimized selection of one or more agricultural working machines (1) and/or agricultural attachments (3) and/or agricultural combinations (7) for the operational procedure, and/or **in that** in the optimization routine, the optimization control assembly (16) determines proposals for an optimized selection of one or more sensors (12) and/or sensor types and/or mounting positions (15) and/or a number of sensors of the sensor assembly (8).

8. The method according to one of the preceding claims, **characterized in that** in the optimization routine, the optimization control assembly (16) determines the optimization data set as a function of weightings of objectives, preferably **in that** the weighting of the objectives is incorporated into the characteristic maps, more preferably **in that** variations in the weighting of at least some of the objectives do not force a variation in the characteristic maps during the execution of the operational procedure.

9. The method according to one of the preceding claims, **characterized in that** during the operational procedure, the user (17) can specify dialogue-based weightings of the objectives for the control and/or regulation of the agricultural combination (7), **in that** the optimization data set comprises an optimized working height (9) as a function of the objectives, **in that** the combination control assembly (11) proposes and/or regulates an optimized working height (9) on the basis of the optimization data set and the objectives, preferably **in that** the combination control assembly (11) proposes and/or regulates optimized other machine parameters on the basis of the optimization data set and the objectives and the optimized working height (9).

10. The method according to one of the preceding claims, **characterized in that** in the optimization routine, the optimization control assembly (16) determines proposals for pre-settings for the agricultural working machine (1) and/or the agricultural attachment (3), preferably **in that** the optimization data set, in particular the characteristic maps, is dependent on the proposals.

11. The method according to one of the preceding claims, **characterized in that** in the optimization routine, the optimization control assembly (16) determines the optimization data set, preferably the characteristic maps and/or the proposals on the basis of properties of the field, preferably a soil type and/or moisture of the field and/or a field crop and/or a crop sequence, as optimization data which does not concern the combination, and/or **in that** in the optimization routine, the optimization control assembly (16) determines the optimization data set, preferably the characteristic maps and/or the proposals on the basis of a planned fleet size for the operational procedure and/or a planned worktime window and/or planned further cultivation steps and/or planned further cultivation periods as the optimization data which does not concern the combination.

12. The method according to one of the preceding claims, **characterized in that** in the optimization routine, the optimization control assembly (16) determines the optimization data set, preferably the characteristic maps and/or the proposals on the basis of measurement data from the sensor (12) of previous operational procedures.

13. An optimization control assembly configured for use in the method according to one of the preceding claims.

## Revendications

1. Procédé d'optimisation préalable de processus de travail agricoles pour des attelages agricoles (7), les attelages agricoles (7) comprenant un engin agricole (1) et respectivement des outils agricoles attelés (3) différents, un dispositif de capteur (8) étant prévu pour la détermination d'une hauteur de travail (9) absolue des outils agricoles attelés (3), l'attelage agricole (7) présentant un dispositif de commande d'attelage (11), le dispositif de capteur (8) comportant un capteur (12) pour la détermination de données de mesure concernant la hauteur de travail (9) absolue, un support de capteur (13) et un dispositif de commande de capteur (10), sachant que le capteur (12), lorsqu'il est à l'état monté dans une position de montage (15), recueille des données de mesure concernant une hauteur de travail (9) absolue et les transmet au dispositif de commande d'attelage (11), sachant que pendant le processus de travail, le dispositif de commande d'attelage (11) commande et/ou régule des paramètres de machine de l'attelage agricole (7) respectif, sur la base d'un ensemble de données d'optimisation et des données de mesure,
selon lequel il est prévu un dispositif de commande d'optimisation (16) qui, au cours d'une routine d'optimisation précédant l'exécution du processus de travail, détermine l'ensemble de données d'optimisation, à partir d'objectifs d'optimisation concurrents, de données d'optimisation externes à l'attelage et de données d'optimisation concernant l'attelage (7), et le met à disposition du dispositif de commande d'attelage (11),
selon lequel l'ensemble de données d'optimisation comprend des suggestions de réglages optimisés de paramètres de machine de l'attelage agricole (7) par rapport aux objectifs d'optimisation, en fonction d'autres paramètres de machine de l'attelage agricole (7) et/ou de données de mesure de l'attelage agricole (7),
**caractérisé en ce que**
le dispositif de capteur (8) est conçu pour déterminer la hauteur de travail (9) absolue de plusieurs outils attelés (3) différents, à l'aide d'un même capteur (12), et **en ce que** l'ensemble de données d'optimisation soumet une suggestion pour une hauteur de travail (9) de l'outil attelé (3) qui est optimisée par rapport aux objectifs d'optimisation, et/ou soumet des suggestions pour des réglages d'autres paramètres de machine de l'attelage agricole (7) qui sont optimisés par rapport aux objectifs d'optimisation et dépendent d'une hauteur de travail (9) réglée.

2. Procédé selon la revendication 1, **caractérisé en ce que** le capteur (12) peut être monté de façon réversible sur les outils attelés (3), **en ce que** le capteur (12) est utilisé pour déterminer la hauteur de travail (9) de plusieurs outils attelés (3) et est à cet effet monté respectivement sur l'outil attelé (3), de préférence **en ce que** le capteur (12) est monté de façon réversible respectivement dans une position de montage (15) sur des outils attelés (3) différents, à l'aide du support de capteur (13), au nombre d'au moins un, **en ce que** le support de capteur (13) peut être monté séparément du capteur (12) sur les outils attelés (3) différents, et le capteur (12) peut être monté de façon réversible sur le support de capteur (13).

3. Procédé selon la revendication 1 ou 2, **caractérisé en ce que** le capteur (12) est un capteur de distance, notamment sans contact, de préférence que le capteur de distance fonctionne à base d'ondes électromagnétiques ou d'ondes acoustiques ou d'un palpage mécanique, et en outre de préférence que le capteur de distance est un capteur radar ou un capteur lidar ou un capteur optique ou un capteur à ultrasons, ou que le capteur (12) est un capteur (12), notamment un capteur de force ou un capteur de déplacement, sur un élément qui est en contact avec le sol, en particulier un étrier palpeur, un patin frottant ou un rouleau de support.

4. Procédé selon une des revendications précédentes, **caractérisé en ce que** l'ensemble de données d'optimisation présente des diagrammes caractéristiques qui reproduisent les liens de dépendance des réglages de paramètres de machine, notamment de la hauteur de travail (9), de l'attelage agricole (7) par rapport à d'autres paramètres de machine de l'attelage agricole (7) et/ou des données de mesure de l'attelage agricole (7), **en ce que** le dispositif de commande d'attelage (11) commande l'attelage agricole (7) dans une plage de travail des diagrammes caractéristiques, sur la base des diagrammes caractéristiques, et adapte les diagrammes caractéristiques en cas de sortie de la plage de travail des diagrammes caractéristiques.

5. Procédé selon une des revendications précédentes, **caractérisé en ce que** l'ensemble de données d'optimisation est fonction de la position de montage, de préférence que l'ensemble de données d'optimisation présente au moins un diagramme caractéristique dépendant de la position de montage, en outre de préférence que le diagramme caractéristique dépendant de la position de montage reproduit des réglages de paramètres de machine de l'attelage agricole (7) en fonction de la hauteur de travail (9) à la position de montage (15).

6. Procédé selon une des revendications précédentes, **caractérisé en ce que** l'ensemble de données d'optimisation comprend des suggestions pour des réglages, dépendant de la hauteur de travail (9) réglée, pour une régulation du moteur et/ou une régulation du déplacement et/ou une régulation du mécanisme de transmission et/ou une régulation du ventilateur et/ou pour une régulation de l'interface d'outil (2), de préférence une régulation de la force de traction et/ou une régulation du patinage et/ou une régulation de position et/ou un réglage mixte de la régulation de la force de traction et de la position et/ou pour une régulation de la pression d'appui et/ou une régulation du rappuyage et/ou une régulation de l'intensité de semis de l'outil agricole attelé (3).

7. Procédé selon une des revendications précédentes, **caractérisé en ce que** le dispositif de commande d'optimisation (16) détermine, dans la routine d'optimisation, des suggestions pour une sélection optimisée d'un ou plusieurs engins agricoles (1) et/ou d'outils agricoles attelés (3) et/ou d'attelages agricoles (7) pour le processus de travail, et/ou **en ce que** le dispositif de commande d'optimisation (16) détermine, dans la routine d'optimisation, des suggestions pour une sélection optimisée d'un ou plusieurs capteurs (12) et/ou types de capteurs et/ou positions de montage (15) et/ou un nombre de capteurs du dispositif de capteur (8).

8. Procédé selon une des revendications précédentes, **caractérisé en ce que** le dispositif de commande d'optimisation (16) détermine, dans la routine d'optimisation, l'ensemble de données d'optimisation en fonction de pondérations de consignes, de préférence que la pondération des consignes est prise en compte dans les diagrammes caractéristiques, en outre de préférence que des modifications de la pondération d'au moins quelques-unes des consignes pendant l'exécution du processus de travail n'imposent pas la modification des diagrammes caractéristiques.

9. Procédé selon une des revendications précédentes, **caractérisé en ce que** pendant le processus de travail, l'utilisateur (17) peut prédéfinir, sur la base d'un dialogue, des pondérations des consignes pour la commande et/ou la régulation de l'attelage agricole (7), **en ce que** l'ensemble de données d'optimisation comprend une hauteur de travail (9) optimisée en fonction des consignes, **en ce que** le dispositif de commande d'attelage (11) propose et/ou règle une hauteur de travail (9) optimisée, sur la base de l'ensemble de données d'optimisation et des consignes, de préférence que le dispositif de commande d'attelage (11) propose et/ou règle d'autres paramètres de machine optimisés, sur la base de l'ensemble de données d'optimisation et des consignes et de la hauteur de travail (9) optimisée.

10. Procédé selon une des revendications précédentes, **caractérisé en ce que** le dispositif de commande d'optimisation (16) détermine, dans la routine d'optimisation, des suggestions pour des préréglages de l'engin agricole (1) et/ou de l'outil agricole attelé (3), de préférence **en ce que** l'ensemble de données d'optimisation, notamment les diagrammes caractéristiques, dépend des suggestions.

11. Procédé selon une des revendications précédentes, **caractérisé en ce que** le dispositif de commande d'optimisation (16) détermine, dans la routine d'optimisation, l'ensemble de données d'optimisation, de préférence les diagrammes caractéristiques, et/ou les suggestions, sur la base de caractéristiques du champ, de préférence d'un type de sol et/ou d'une humidité du champ et/ou de végétaux d'un champ et/ou d'une rotation de cultures, en tant que données d'optimisation externes à l'attelage, et/ou **en ce que** le dispositif de commande d'optimisation (16) détermine, dans la routine d'optimisation, l'ensemble de données d'optimisation, de préférence les diagrammes caractéristiques, et/ou les suggestions, sur la base d'une taille de flotte prévue pour le processus de travail et/ou d'une fenêtre de temps de travail prévue et/ou d'étapes de traitement supplémentaires prévues et/ou de périodes de traitement supplémentaires prévues, en tant que données d'optimisation externes à l'attelage.

12. Procédé selon une des revendications précédentes, **caractérisé en ce que** le dispositif de commande d'optimisation (16) détermine, dans la routine d'optimisation, l'ensemble de données d'optimisation, de préférence les diagrammes caractéristiques, et/ou les suggestions, sur la base de données de mesure du capteur (12) issues de processus de travail antérieurs.

13. Dispositif de commande d'optimisation conçu pour une utilisation dans le procédé selon une des revendications précédentes.
